# EUROPÄISCHE PATENTANMELDUNG

(11) **EP 1 336 591 A2**
(43) Veröffentlichungstag der Anmeldung: **20.08.2003**
(21) Anmeldenummer: 02026808.2
(22) Anmeldetag: 28.11.2002
(51) Int. Cl.: C03B 33/09

(54) **Verfahren und Vorrichtung zum Trennen von Glastafeln mittels eines Lasers**

(30) Priorität: 19.02.2002 DE 10206920
(71) Anmelder: HEGLA Fahrzeug- u. Maschinenbau GmbH & Co. KG, D-37688 Beverungen (DE)
(72) Erfinder: Glaser, Siegfried, 37688 Beverungen (DE)
(74) Vertreter: Patentanwälte Dr. Solf & Zapf

(57) **Zusammenfassung**

Die Erfindung betrifft ein Verfahren zum Trennen von Glas und eine Vorrichtung hierfür, wobei durch eine Wärmequelle, insbesondere einen Laserstrahler im Bereich einer gewünschten Trennlinie thermomechanische Spannungen durch Bestrahlung eingetragen werden, wobei der Laserstrahler entlang der Trennlinie, mindestens einen Laserstrahl aussendend, verfahren wird und ein Mittel zur Reflektion des Laserstrahls unterhalb der Glasplatte dem Laserstrahler gegenüberliegend mit bewegt wird.

## Beschreibung

Die Erfindung betrifft ein Verfahren zum Trennen von Glas nach dem Oberbegriff des Anspruch 1 und eine Vorrichtung zum Durchführen des Verfahrens nach dem Oberbegriff des Anspruch 16.

Es ist bekannt, Rohglastafeln oder Rohglasplatten zum Trennen derselben entlang einer linearen, meist quer zur Längserstrekkung verlaufenden Trennlinie mit einem Schneidrädchen oder anderen geeigneten Ritzeinrichtungen anzuritzen und anschließend durch das Anheben und Biegen der Glasplatte im Bereich der Ritzlinie einen Bruch und damit die Trennung zu erzeugen.

Ferner ist es bekannt, sogenanntes Verbundglas in ähnlicher Weise zu trennen. Unter Verbundglas versteht man eine aus zwei aufeinander gefügte Glasplatten ausgebildete Glasscheibe, wobei eine erste innere Platte aus einem üblicherweise unbeschichteten Glas besteht und eine zweite äußere Platte aus einem insbesondere beschichteten, insbesondere mit einer Wärmeschutzschicht versehenen Glas besteht. Die beiden Glasplatten sind mit einer zwischen diesen flächig angeordneten Folie miteinander verbunden.

Um zwei derart miteinander verbundene Rohglasplatten in gebrauchsfähige Formate zu zerschneiden, werden Verbundglasschneidanlagen verwendet.

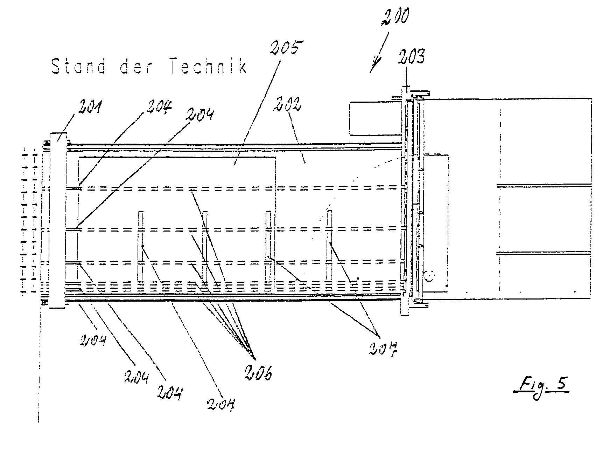

Eine bekannte Verbundglasschneidanlage 200 (Fig. 5) besitzt eine Verfahrbrücke 201, einen Auflagetisch 202 sowie eine Schneidbrücke 203. An der Verfahrbrücke 201 sind zur Schneidbrücke 203 hin Greifer 204 angeordnet, deren Greifermaul eine Verbundglasscheibe 205 klemmen kann. Da die Scheibe 205 auf dem Auflagetisch 202 aufliegt, müssen untere Klemmbacken der Greifer 204 in Nuten 206 im Auflagetisch 202 laufen. Mit den Greifern 204 kann die Scheibe 205, nachdem sie mit geeigneten Transportmitteln wie Transportrollen oder Transportbändern auf den Auflagetisch 202 gefördert wurde oder manuell mit Aufstellarmen 207 aufgelegt wurde, gegriffen und auf die Schneidbrücke 203 zu geschoben werden.

Eine derartige Verbundglasschneidanlage ist beispielsweise aus der DE 32 30 554 A1 bekannt. Nach dem Schneiden bzw. Ritzen mit einer Schneidbrücke werden die Glasscheiben entlang der Ritzlinie geknickt, um einen durchgehenden Bruch im Bereich der Ritzlinie zu erzeugen. Anschließend oder dabei werden die Glasplatten auseinandergezogen und die Folie im Spalt durch Hitzeeinwirkung abgeschmolzen bzw. getrennt. Bei derartigen bekannten Verbundglasschneidanlagen ist von Nachteil, daß sie neben einer erheblichen Baulänge eine aufwändige Transporttechnik erfordern, wobei die Verbundglasscheiben nur entlang gerader Linien parallel zu den Tischkanten bzw. Glaskanten schneidbar und trennbar sind.

Aus der DE 199 63 939 A1 sind ein Verfahren und eine Vorrichtung zum Durchtrennen von flachen Werkstücken aus sprödbrüchigem Material bekannt. Das Verfahren sieht vor, einen Laserstrahl mit einem linienförmigen Strahlprofil auf ein sprödbrüchiges Material, beispielsweise Glas, zu werfen und einen sogenannten Kühlfleck zur Erhöhung der thermomechanischen Spannung nachzuführen. Um eine beliebige Kontur trennen zu können (Freiformschnitt) wird ein linienförmiger Brennfleck durch Scannen des Laserstrahls erzeugt und während jeder Scanbewebung Bahndaten der Trennlinie bereitgestellt derart, daß der linienförmige Brennfleck eine Krümmung entsprechend der Krümmung der Kontur der Trennlinie erfährt und seine Länge ebenfalls abhängig von der Krümmung der Kontur der Trennlinie durch Einstellen der Scanamplitude eingestellt wird.

Aufgabe der Erfindung ist es, ein Verfahren und eine Vorrichtung zum Trennen von Glasplatten zu schaffen, welches einfach und kostengünstig durchführbar ist, mit hoher Effektivität arbeitet, in bestehende Anlagen einbaubar ist und zudem Freiform- bzw. Konturenschnitte ermöglicht.

Die Aufgabe wird mit einem Verfahren mit den Merkmalen des Anspruch 1 und mit einer Vorrichtung nach Anspurch 16 gelöst. Vorteilhafte Weiterbildungen sind in den Unteransprüchen gekennzeichnet.

Das erfindungsgemäße Verfahren sieht vor, in einer Schneideinrichtung für Flachglas, insbesondere Glasrohplatten aber auch Verbundglasrohplatten, an einer Schneidbrücke eine Laserschneideinrichtung derart vorzusehen, daß auf einer Seite der Glasplatte ein Laser-Strahler entlang einer zu trennenden Linie bewegt wird und auf der gegenüberliegenden Seite dem Laserstrahl gegenüberliegend ein Reflektor, eine Optik oder eine Kombination aus einem Reflektor und einer Optik synchron mit der Bewegung des Laserstrahls mitgeführt wird.

Erfindungsgemäß kann eine derartige Schneidvorrichtung mit einer Positionierbrücke kombiniert werden, welche die zu schneidende Glasplatte auf dem Bearbeitungstisch vor- und zurückbewegen kann, so daß aus der Kombination der Vor- und Zurückbewegung und der dazu senkrecht stattfindenden Schneidbewegung beliebige Konturen getrennt werden können. Bei dem erfindungsgemäßen Verfahren bzw. der erfindungsgemäßen Vorrichtung ist von Vorteil, daß durch die synchrone Bewegung eines Laserstrahlers mit einer diesen Laserstrahl im Bereich der Unterseite einer Glasplatte oder Verbundglasrohplatte beeinflussenden bzw. verstärkenden und lenkenden Optik bzw. Reflektoroptik eine deutlich erhöhte Effektivität erzielt werden kann. Ferner ist von Vorteil, daß extrem saubere Kanten erzielt werden, die ohne weitere Nachbearbeitung verwendbar sind. Darüber hinaus kann die Trennung in vorteilhafter Weise sehr schnell und sehr präzise erfolgen, wobei Fehler durch ungerichtete thermomechanische Spannungen vermieden werden.

Bei der Verwendung eines Laserstrahlers mit einer gegenüber dem Laserstrahler angeordneten Optik oder einer Kombination aus einem Reflektor und einer Optik ist von Vorteil, daß es nicht wie bei flächigen Reflektoren zu einem ungerichteten Wärmeabfluß kommt, sondern die Leistung des Lasers mit größtmöglichem Wirkungsgrad in das zu trennende Medium zurückgeführt wird. Dabei ist es in vorteilhafter Weise auch möglich, durch den Reflektor bzw. eine Reflektoroptik-Kombination den Laserstrahl nicht direkt zurück auf den Strahler zu führen sondern gegebenenfalls abzulenken und auf weitere Reflektoren oberhalb oder unterhalb des Glases zu führen.

In besonders vorteilhafter Weise lassen sich das erfindungsgemäße Verfahren und die erfindungsgemäße Vorrichtung bei Verbundglas anwenden.

Die Erfindung wird im folgenden beispielhaft anhand einer Zeichnung erläutert. Es zeigen dabei:

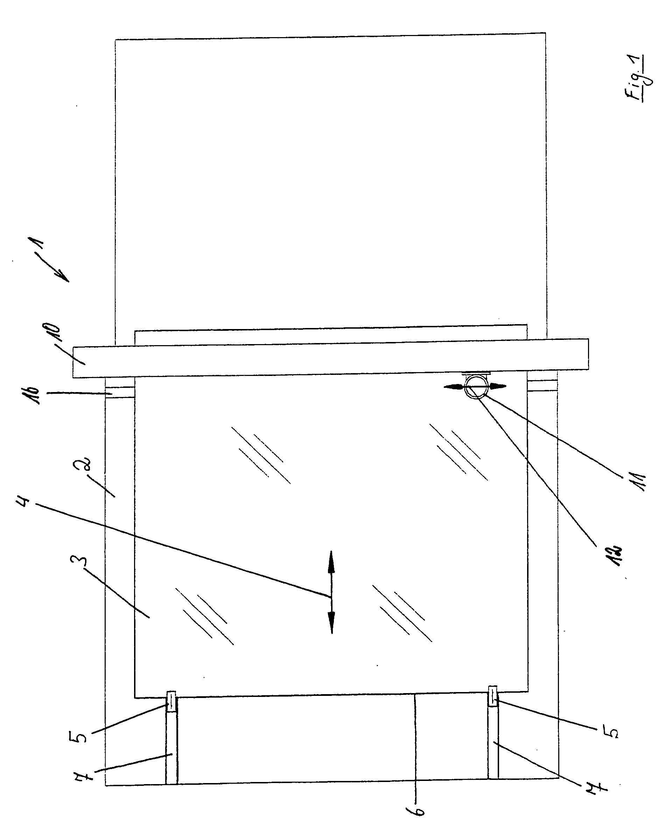

- Fig. 1: eine stark schematisierte Draufsicht auf einen Bearbeitungstisch mit der erfindungsgemäßen Vorrichtung;
- Fig. 2: eine stark schematisierte teilgeschnittene Ansicht auf die erfindungsgemäße Anlage im Bereich der Schneidvorrichtung;
- Fig. 3: die Schneidvorrichtung nach Fig. 2 in einer seitlichen Ansicht:
- Fig. 4: die erfindungsgemäße Vorrichtung in einer Draufsicht in Verbindung mit einer Positionierbrücke, insbesondere zum Schneiden von Konturen;
- Fig. 5: eine Verbundglasschneidanlage nach dem Stand der Technik.

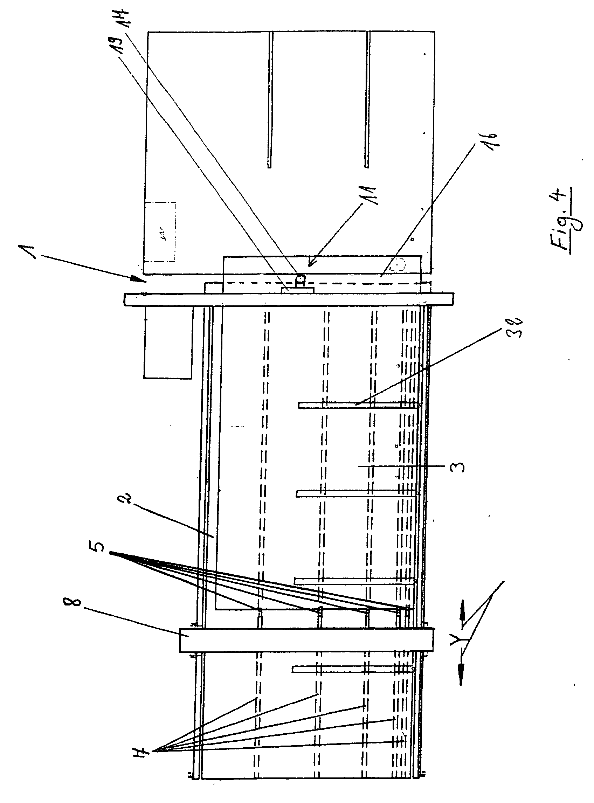

Die Erfindungsgemäße Vorrichtung 1 besitzt einen Bearbeitungstisch 2, auf dem eine Glastafel oder Glasplatte 3 flach aufliegend entsprechend einer Förderrichtung 4 verschieblich bewegbar ist. Um die Scheibe 3 auf dem Tisch 2 zu bewegen, sind Greifpratzen 5, welche die Glasplatte 3 an einer quer zur Bewegungsrichtung 4 verlaufenden Kante 6 greifen, vorhanden. Die Greifpratzen laufen mit einem Unterteil in Nuten 7 im Tisch 2. Die Greifpratzen 7 können am Tisch selber verfahrbar in den Nuten angeordnet sein, insbesondere wenn die Scheibe 3 von der Seite auf den Bearbeitungstisch 2 aufgelegt wird. Die Greifpratzen 5 können jedoch auch an einer Positionierbrücke 8 (Fig. 4) ausgebildet sein, welche in Bewegungsrichtung 4 am Tisch frei verfahrbar ist.

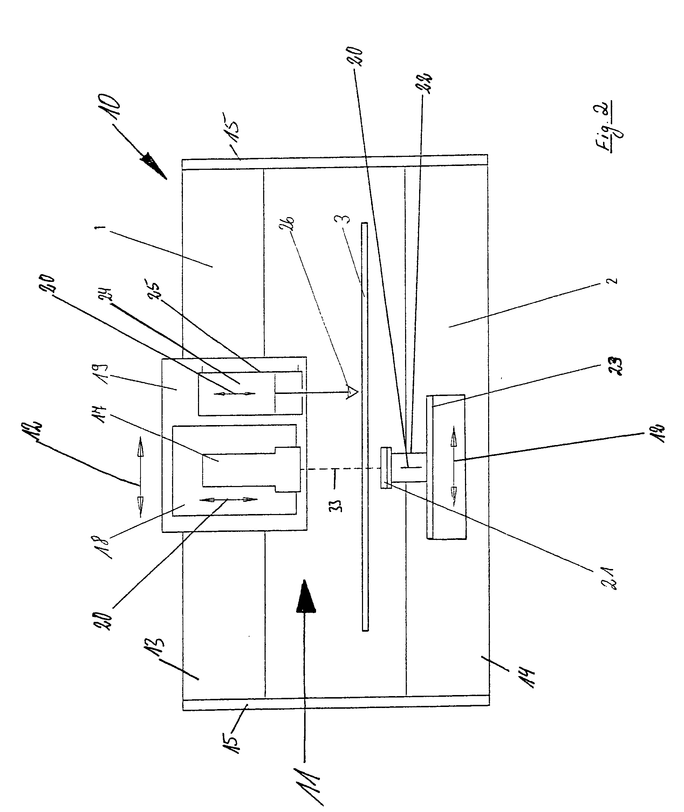

Der Bearbeitungstisch 2 wird von einer Schneidbrücke 10 überspannt. An der Schneidbrücke 10 ist die Schneideinrichtung 11 entlang der Brücke 10 verfahrbar angeordnet. Die Bewegungsrichtung 12 der Schneideinrichtung 11 steht senkrecht auf der Bewegungsrichtung 4 der Glasplatte 3. Die Schneidbrücke 10 (Fig. 2) besitzt einen oberen Brückenträger 13 und einen unteren Brückenträger 14, welche jeweils den Tisch überspannen und seitlich mit Verbindungseinrichtungen 15 in Verbindung stehen. Die Brückenträger 13, 14 sind bezüglich der Glastafelebene übereinander angeordnet. Im Bereich der Schneideinrichtung 11 ist im Bearbeitungstisch 2 eine durchgehende Aussparung bzw. ein durchgehender Schlitz 16 vorhanden.

Die Schneideinrichtung 11 besitzt eine Laserstrahlereinrichtung 17, welche über eine Verfahreinrichtung 18 an einer Grundplatte 19 angeordnet ist. Die Grundplatte 19 ist entlang der Bewegungsrichtung 12 an der Brücke verfahrbar. Die Verfahreinrichtung 18 kann den Laserstrahler 17 entlang der Bewegungsrichtung 20 senkrecht auf die Glastafelebene zu fahren oder von dieser weg fahren. An dem gegenüberliegenden Brückenträger 14 weist die Schneideinrichtung 11 einen Laserreflektor 21 auf. Der Laserreflektor 21 ist über eine Verschiebeeinrichtung 22 an einer Grundplatte 23 angeordnet, welche am Träger 14 entlang der Bewegungsrichtung 12 quer zum Tisch 2 verfahrbar ist. Die Bewegungseinrichtung 22 kann den Laserreflektor 21 entsprechend der Bewegungsrichtung 20 auf die Glastafelebene zu oder von der Glastafelebene weg verfahren. Die Schneideinrichtung 11 ist dabei so ausgebildet, daß der Laserstrahler 17 und der Laserreflektor 21 sich in jedem Bewegungszustand oder Ruhezustand immer diametral zentriert gegenüberliegend angeordnet sind. Zentriert heißt, daß der Laserstrahl nach dem Durchdringen der Glastafel 3 immer zentriert auf den Laserreflektor 21 bzw. auf die Optik des Laserreflektors 21 trifft. Hierzu können die Grundplatten 19, 23 mechanisch oder steuerungstechnisch miteinander gekoppelt sein.

An der Grundplatte 23, vorzugsweise jedoch an der Grundplatte 19 ist ferner eine Rißinitialisierungseinrichtung 24 vorhanden. Die Rißinitialisierungseinrichtung 24 besteht beispielsweise aus einem pyramidenförmigen oder kegelförmigen Eindrückkörper 26, der über eine Kolbenzylindereinheit 25 entlang der Bewegungsrichtung 20 auf eine Glasplatte 3 absenkbar und in diese einpreßbar ist.

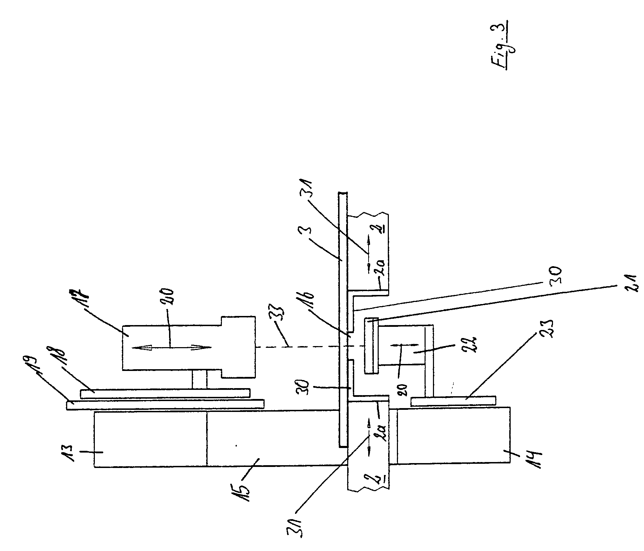

Um den Bearbeitungstisch 2 im Bereich des Spalts 16 vor der Hitzeeinwirkung durch den Laser zu schützen, wird der Spalt jeweils von einer Winkelleiste 30 begrenzt, wobei die Winkelleisten 30 mit einem Schenkel mit der Tischoberseite derart abschließen, daß die Glastafel 3 auf ihnen ruht, und mit dem anderen Leistenschenkel an den jeweiligen Kanten 2a des Tisches 2 anliegt. Vorzugsweise ist der Bearbeitungstisch entlang der Bewegungsrichtungen 31 derart verfahrbar ausgebildet, daß die Spaltweite 16 verbreitert oder verringert werden kann (Fig. 3).

Im folgenden wird das erfindungsgemäße Verfahren erläutert:

Eine Glasplatte oder Verbundglasplatte 3 (Fig. 4) wird beispielsweise mittels Aufstellarmen 32 oder mittels einer Fördereinrichtung (nicht gezeigt) auf einen Bearbeitungstisch 2 gelegt und anschließend mit Greifpratzen 5 entweder des Bearbeitungstisches 2 oder einer Positionierbrücke 8 gegriffen und in den Bereich der Schneideinrichtung 11 gefahren. Anschließend wird an einem beliebigen Punkt der gewünschten Trennlinie der Einddrückkörper 26 in die Glasoberfläche eingedrückt und bildet an dieser Stelle eine Oberflächenverletzung. Anschließend werden der Laserstrahler 17 und der Laserreflektor 21 aufeinander zu gefahren, bis ein möglichst geringer Abstand zwischen beiden eingestellt wird. Gegebenenfalls werden die Winkel 30 aufeinder zu gefahren, um die Spaltbreite des Spaltes 16 zu minimieren, wobei die Winkel 30 den Laserreflektor und seine Mimik vor Hitze schützen können und zudem auch die Scheibe 3 von diffus vom Laserreflektor 21 abgestrahlten Strahlungsanteilen schützen können. Anschließend wird der Laser aktiviert und ein Laserstrahl 33 durch die Glasplatte 3 geführt und vom Reflektor zurück reflektiert.

Der Laser 17 und der Reflektor 21 werden entlang der Schneidbrücke 10 synchron geführt. Soll von der Glasplatte 3 eine Travere abgeschnitten werden, das heißt ein Stück mit planparallelen Kanten zur verbleibenden Platte, wird die Glasplatte 3 lediglich so positioniert, daß die Trennlinie genau im Bereich des Laserstrahls liegt. Soll eine Freiform bzw. ein beliebiger, auch gewinkelter, gewölbter oder gekrümmter Schnitt geführt werden, werden die Bewegung der Schneideinrichtung 11 entlang der Bewegungsrichtung 12 durch die Bewegung der Schneideinrichtung 11 entlang der Brücke 10 einerseits und die Bewegung der Platte 3 durch die Greifpratzen 5 überlagert, wobei die Steuerung üblicherweise mit einer EDV realisiert wird. Beim Überfahren des Eindruckpunktes in der Glasoberfläche wird von diesem Eindruckpunkt aus sich ein durch die Glasplatte 3 durchgehender sauberer Riß ergeben, der so fein ist, daß er weder Welligkeit, Muscheligkeit, Rauhigkeiten oder Risse aufweist. In bestimmten Fällen kann die Strahlung des Lasers ausreichen, so daß ein Eindruckpunkt nicht benötigt wird, wobei die Strahlung des Laserstrahlers auf jeden Fall so hoch ist, daß eine Verbindungsfolie in Verbundglasplatten getrennt wird. Durch den synchron mitgeführten Laserreflektor, der gegebenenfalls über eine Optik verfügt, wird sowohl die Glasober- als auch die Glasunterseite, bei Verbundglasplatten die obere Scheibe und die untere Scheibe sicher erhitzt und durch die Erhitzung und dadurch hervorgerufene Spannungen sicher getrennt.

Bei der erfindungsgemäßen Vorrichtung ist von Vorteil, daß sie relativ einfach aufgebaut ist und zum Trennen der Glasplatte oder einer Verbundglasplatte lediglich der Laserstrahler und die synchron mitgeführte Reflektoroptik notwendig sind. Da der Laser die Verbundglasfolie ebenfalls trennt, ist ein nach dem Schneiden erforderlicher Erhitzungsschritt der Verbundglasfolie mit anschließendem Auseinanderziehen derselben und Durchtrennen mit einem separaten Trennmesser nicht mehr notwendig. Die Anlage weise somit einen erheblich vereinfachten Aufbau auf. Ferner ist von Vorteil, daß die erfindungsgemäße Vorrichtung schnell und sicher arbeitet und ohne um die Hochachse drehbare Schneidrädchen jede beliebige Kontur im Glas getrennt werden kann. Dies vereinfacht die Steuerung eines Modell- oder Konturenschneidens ganz erheblich.

Bei dem erfindungsgemäßen Verfahren ist von Vorteil, daß die erfindungsgemäße Schneideinrichtung mit einem Laserstrahler und einem diametral darunter befindlichen, synchron mitgeführten Reflektor, insbesondere einem Reflektor und Optik, äußerst exakt das Glas trennt, wobei absolut ebene Kanten entstehen, die direkt weiterverarbeitet werden können. Das heißt, derart hergestellte Kanten müssen nicht mehr nachgeschliffen werden. Die Kanten weisen ferner keinerlei Welligkeit, Muscheligkeit, Rissigkeit auf und sind auch nicht scharfkantig, so daß derart getrenntes Glas jederzeit händisch weiterverarbeitet werden kann.

## Patentansprüche

1. Verfahren zum Trennen von Glas, wobei durch eine Wärmequelle, insbesondere einen Laserstrahler im Bereich einer gewünschten Trennlinie thermomechanische Spannungen durch Bestrahlung eingetragen werden, wobei der Laserstrahler entlang der Trennlinie, mindestens einen Laserstrahl aussendend, verfahren wird und ein Mittel zur Reflektion des Laserstrahls unterhalb der Glasplatte dem Laserstrahler gegenüberliegend mit bewegt wird.

2. Verfahren nach Anspruch 1,
**dadurch gekennzeichnet,**
**daß** der Laserstrahl mit einem Reflektor reflektiert wird.

3. Verfahren nach Anspruch 1,
**dadurch gekennzeichnet,**
**daß** ein Reflektor mit einer vorgeschalteten oder nachgeschalteten Linsenanordnung verwendet wird.

4. Verfahren nach einem der vorhergehenden Ansprüche,
**dadurch gekennzeichnet,**
**daß** unterhalb der Glasplatte ein zweiter Laser mitgeführt wird.

5. Verfahren nach einem der vorhergehenden Ansprüche,
**dadurch gekennzeichnet,**
**daß** das Mittel zur Reflektion und/oder der zweite Laser synchron mitbewegt werden.

6. Verfahren nach einem der vorhergehenden Ansprüche,
**dadurch gekennzeichnet,**
**daß** ein Festkörperlaser verwendet wird.

7. Verfahren nach einem der vorhergehenden Ansprüche,
**dadurch gekennzeichnet,**
**daß** ein Gaslaser verwendet wird.

8. Verfahren nach einem der vorhergehenden Ansprüche,
**dadurch gekennzeichnet,**
**daß** zur Einleitung oder Unterstützung der Trennung vor, während oder nach dem Bestrahlen die Glasoberfläche im Bereich der Trennlinie angeritzt, eingedrückt oder in anderweitiger Weise verletzt wird.

9. Verfahren nach einem der vorhergehenden Ansprüche,
**dadurch gekennzeichnet,**
**daß** die Trennlinie nach dem Bestrahlen auf einer Seite oder auf beiden Seiten gekühlt wird.

10. Verfahren nach einem der vorhergehenden Ansprüche,
**dadurch gekennzeichnet,**
**daß** zur Erzielung von Freiform- oder Modellschnitten der Laserstrahler entlang einer Verfahrbrücke einer Glastrenneinrichtung verfahren und die Glasplatte (3) gleichzeitig senkrecht dazu bewegt wird.

11. Verfahren nach einem der vorhergehenden Ansprüche,
**dadurch gekennzeichnet,**
**daß** der Laserstrahler (17) und der Laserreflektor (21) nach dem Vorpositionieren einer Glasplatte (3) aufeinander zugefahren werden, vorzugswiese bis ein möglichst geringer Abstand zwischen beiden eingestellt ist.

12. Verfahren nach einem der vorhergehenden Ansprüche,
**dadurch gekennzeichnet,**
**daß** der Laserstrahlerreflektor (21) oder der zweite Laserstrahler unterhalb des zu trennenden Glases unterhalb oder in einem schmalen Spalt (16) des Bearbeitungstisches (2) geführt wird.

13. Verfahren nach einem der vorhergehenden Ansprüche,
**dadurch gekennzeichnet,**
**daß** die kombinierte Bewegung der Schneideinrichtung (11) und der Glasplatte (3) mittels einer EDV gesteuert wird.

14. Verfahren nach einem der vorhergehenden Ansprüche,
**dadurch gekennzeichnet,**
**daß** der Laserstrahl auf den Austrittspunkt zurückreflektiert wird.

15. Verfahren nach einem der vorhergehenden Ansprüche,
**dadurch gekennzeichnet,**
**daß** beim Mitführen eines zweiten Lasers die Laserstrahlen fluchten.

16. Vorrichtung zum Trennen von Glas, wobei eine Schneideinrichtung an einer Verfahrbrücke entlang einer geplanten Trennlinie verfahrbar angeordnet ist,
**dadurch gekennzeichnet,**
**daß** die Schneideinrichtung (11) aus einem Laserstrahler (17) und einem unterhalb der Glasplatte diametral gegenüberliegend angeordneten Reflektor und/oder einer Reflektoroptik aus einem Linsensystem und einem Reflektor und/oder einem zweiten Laserstrahler ausgebildet ist.

17. Vorrichtung nach Anspruch 16,
**dadurch gekennzeichnet,**
**daß** sie ein Bearbeitungstisch (2) besitzt, auf dem eine Glastafel oder Glasplatte (3) flach aufliegend entsprechend einer Förderrichtung (4) verschieblich bewegbar ist, wobei der Bearbeitungstisch (2) von der Schneidbrücke (10) überspannt wird, wobei an der Schneidbrücke (10) die Schneideinrichtung (11) entlang der Brücke (10) verfahrbar angeordnet ist, wobei die Bewegungsrichtung (12) der Schneideinrichtung (11) senkrecht auf der Bewegungsrichtung (4) der Glasplatte (3) steht und die Schneidbrücke (10) einen oberen Brückenträger (13) und einen unteren Brückenträger (14) besitzt, welche jeweils den Tisch überspannen und seitlich mit Verbindungseinrichtungen (15) in Verbindung stehen, wobei die Brückenträger (13, 14) bezüglich der Glastafelebene übereinander angeordnet sind.

18. Vorrichtung nach Anspruch 16 oder 17,
**dadurch gekennzeichnet,**
**daß** im Bereich der Schneideinrichtung (11) im Bearbeitungstisch (2) die durchgehende Aussparung bzw. der durchgehende Schlitz (16) vorhanden ist.

19. Vorrichtung nach einem der Ansprüche 16 bis 18,
**dadurch gekennzeichnet,**
**daß** eine Positionierbrücke zum Verschieben und Positionieren der Glastafel auf dem Tisch vorhanden ist, wobei einer Positionierbrücke (8) zumindest eine Greifereinrichtung (5) vorhanden ist, so daß die Glasplatte oder -tafel (3) gegriffen und mit der Positionierbrücke (8) auf dem Tisch (2) verfahrbar ist.

20. Vorrichtung nach einem der Ansprüche 16 bis 19,
**dadurch gekennzeichnet,**
**daß** die Schneideinrichtung (11) die Laserstrahleinrichtung (17) aufweist, welche über eine Verfahreinrichtung verfügt, wobei die Verfahreinrichtung (18) den Laserstrahler (17) entlang einer Bewegungsrichtung (20) senkrecht auf die Glastafelebene zufahren oder von dieser wegfahren kann, wobei ferner eine Grundplatte (19) vorhanden ist, welche entlang der Bewegungsrichtung (12) an der Brücke (10) verfahrbar ist.

21. Vorrichtung nach einem der Ansprüche 16 bis 20,
**dadurch gekennzeichnet,**
**daß** an dem dem Brückenträger (13) gegenüberliegenden Brükkenträger (14) die Schneideinrichtung (11) den Laserreflektor (21) oder einen zweiten Laserstrahler aufweist, wobei der Laserreflektor (21) oder der zweite Laserstrahler über eine Verschiebeeinrichtung (22) derart am Träger (14) angeordnet ist, daß er entlang der Bewegungsrichtung (12) quer zum Tisch (2) verfahrbar angeordnet ist, wobei eine Bewegungseinrichtung (22) den Laserreflektor (21) oder einen zweiten Laserstrahler entsprechend der Bewegungsrichtung (20) auf die Glastafelebene zu oder von der Glastafelebene weg verfahren kann.

22. Vorrichtung nach einem der Ansprüche 16 bis 21,
**dadurch gekennzeichnet,**
**daß** die Schneideinrichtung (11) derart ausgebildet angeordnet ist, daß der Laserstrahler (17) und der Laserreflektor (21) oder ein zweiter Laserstrahler sich in jedem Bewegungszustand oder Ruhezustand diametral zentriert gegenüberliegend angeordnet sind.

23. Vorrichtung nach Anspruch 22,
**dadurch gekennzeichnet,**
**daß** der Laserstrahler (17) und der Laserreflektor (21) oder der zweite Laserstrahler derart zentriert angeordnet sind, daß der Laserstrahl nach dem Durchdringen der Glastafel (3) zentriert auf den Laserreflektor (21) bzw. auf die Optik des Laserreflektors (21) trifft.

24. Vorrichtung nach Anspruch 22 oder 23,
**dadurch gekennzeichnet,**
**daß** die Grundplatten (19, 23) oder andere Einrichtungen, mit denen der Laserstrahler (17) und der Laserreflektor (21) verschieblich an den Trägern (13, 14) angeordnet sind, mechanisch oder elektronisch steuerungstechnisch miteinander gekoppelt angeordnet sind.

25. Vorrichtung nach einem der Ansprüche 16 bis 24,
**dadurch gekennzeichnet,**
**daß** im Bereich des Laserstrahls (17), insbesondere an einer Grundplatte (23) oder im Bereich des Laserreflektors (21) insbesondere an der Grundplatte (19) eine Rißinitialisierungseinrichtung (24) angeordnet ist, wobei die Rißinitialisierungseinrichtung mit Mitteln (26) zum Anritzen und/oder Eindrücken und/oder Verletzen der Oberfläche des Glases im Bereich einer geplanten Trennlinie ausgebildet ist.

26. Vorrichtung nach einem der Ansprüche 16 bis 25,
**dadurch gekennzeichnet,**
**daß** die Rißinitialisierungseinrichtung (24) aus einem pyramidenförmigen oder kegelförmigen oder anders geeignet ausgebildeten Eindrück- oder Ritzkörper (26) aufweist, welcher über eine Kolbenzylindereinheit oder andere geeignete Mittel entlang der Bewegungsrichtung (20) auf eine Glasplatte (3) absenkbar und in diese einpreßbar ist.

27. Vorrichtung nach einem der Ansprüche 16 bis 26,
**dadurch gekennzeichnet,**
**daß** zum Schutz des Bearbeitungstisches (2) vor Hitzeeinwirkung und/oder des Laserreflektors durch Hitzeeinwirkung und/oder benachbarte Aggregate durch Laserstrahlen der Spalt (16) im Tisch (2) durch eine verschiebliche Anordnung einer oder beider Tischhälften einengbar ist.

28. Vorrichtung nach Anspruch 27,
**dadurch gekennzeichnet,**
**daß** der Spalt (16) jeweils von einer Winkelleiste (30) begrenzt wird, wobei die Winkelleisten (30) mit einem Schenkel mit der Tischoberseite derart abschließen, daß die Glastafel (3) auf ihnen ruht und mit dem anderen Leistenschenkel an den jeweiligen Kanten (2a) des Tisches (2) anliegend angeordnet ist.
